# EUROPÄISCHE PATENTANMELDUNG

(11) **EP 2 189 704 A2**
(43) Veröffentlichungstag der Anmeldung: **26.05.2010**
(21) Anmeldenummer: 09013091.5
(22) Anmeldetag: 16.10.2009
(51) Int. Cl.: F16L 43/00

(54) **Verfahren und Vorrichtung zur Herstellung eines gekrümmten Formschlauchs**

(30) Priorität: 24.11.2008 DE 102008058741
(71) Anmelder: VERITAS AG, 63571 Gelnhausen (DE)
(72) Erfinder: Seyler, Andreas, 63584 Gründau-Lieblos (DE); Daumas, Alexandre, 63589 Linsengericht (DE); Haschka, Karl, 63584 Gründau-Lieblos (DE)
(74) Vertreter: Grünecker, Kinkeldey, Stockmair & Schwanhäusser Anwaltssozietät

(57) **Zusammenfassung**

Die Erfindung betrifft ein Verfahren und eine Vorrichtung zur Herstellung eines gekrümmten Formschlauchs (1). Das Verfahren umfasst die Schritte:
a. Bereitstellen eines vernetzbaren Schlauchrohlings, umfassend einen Elastomerschlauch mit einem textilen Druckträger (3), und
b. Überführen des Schlauchrohlings in eine gekrümmte Raumform.

Um ein Fertigungsverfahren für Ladeluftschläuche vorzuschlagen, welches nur unwesentlich hinsichtlich der Fertigungskosten und Prozessschritte vom heutigen Verfahren abweicht, aber trotzdem in der Lage ist, signifikante Steigerungen hinsichtlich der Belastbarkeit und Lebensdauer dieser Schläuche zu realisieren, umfasst das erfindungsgemäße Verfahren zusätzlich die Schritte:
c. Verdrehen des Schlauchrohlings um die Schlauchachse (A) nach einem vorgegebenen Verdrehungsbild in Abhängigkeit von der gekrümmten Raumform, so dass der Druckträger (3) in der gekrümmten Raumform einen spannungsarmen Zustand einnimmt, und
d. Vernetzen des vernetzbaren Schlauchrohlings im verdrehten und spannungsarmen Zustand.

Die Aufgabe der Erfindung wird ebenso gelöst durch eine Vorrichtung zur Herstellung eines gekrümmten Formschlauchs, umfassend ein Formwerkzeug und eine Führungseinrichtung, um einen vernetzbaren Schlauchrohling zumindest abschnittsweise um die Schlauchachse zu verdrehen.

## Beschreibung

Die Erfindung betrifft ein Verfahren und eine Vorrichtung zur Herstellung eines gekrümmten Formschlauchs. Das Verfahren umfasst die Schritte:
a. Bereitstellen eines vernetzbaren Schlauchrohlings, umfassend einen Elastomerschlauch mit einem textilen Druckträger, und
b. Überführen des Schlauchrohlings in eine gekrümmte Raumform.

Formschläuche dieser Art sind aus dem Stand der Technik bekannt und werden z.B. in der Automobilindustrie als Ladeluftschläuche eingesetzt, hier insbesondere als Leitung zwischen Turbolader und Ladeluftkühler. In diesem Einsatzgebiet sind derartige Schläuche hohen Belastungen ausgesetzt. So herrschen in manchen Bereichen im Inneren der Schläuche Temperaturen bis zu 250°C und Drücke über 3 bar Überdruck. Aus diesem Grund haben Ladeluftschläuche einen spezifischen Aufbau. Typischerweise besteht der Schlauch aus einer Innenschicht, aus einem Druckträger und einer Außenschicht.

Trotz aller Sorgfalt bei der Fertigung kann es in extremen Betriebssituationen zu lokalen Beschädigungen an der Ladeluftleitung kommen. Unter anderem sind dafür innere Spannungszustände der Schläuche verantwortlich, die durch die Fertigung entstehen. Diese Spannungszustände lassen sich mit dem oben beschriebenen Verfahren nicht vermeiden und sind der Fachwelt auch bekannt. Aus diesem Grund sind der Fertigung aufwendige Qualitätssicherungsmaßnahmen angeschlossen.

Weitere wichtige Aspekte für die Haltbarkeit der Schläuche werden durch das Design, also durch die Biegeradien und geometrischen Eigenschaften, bestimmt, als auch durch die Montage im Automobil. Sehr enge Radien und Torsionsspannungen im Schlauch, welche durch fehlerhafte Montage hervorgerufen werden, reduzieren die Lebensdauer erheblich.

Ursächlich sind die dynamischen Belastungen von Temperatur und Druck, denen die Schläuche ausgesetzt sind.

Die DE 199 43 289 zeigt einen Lösungsansatz, der den Werker während der Schlauchmontage im Automobil unterstützen soll. Dazu schlägt die Anmeldung einen Schlauch mit einer auf der Mantelfläche sichtbaren Markierung vor. Ist diese Markierung geradlinig und ohne Knicke sichtbar, so hat der Schlauch seine korrekte und vorgesehene Position.

In der Vergangenheit hat man sich ebenfalls mit Verbesserungen hinsichtlich Material und Schlauchaufbau beschäftigt. So sind z.B. Schläuche mit Glasfasergeweben bekannt, die einen erheblich höher belastbaren Druckträger ergeben. Des Weiteren sind Schläuche bekannt, die mehr als einen Druckträger und in Folge dessen auch mehr als zwei elastomere Schichten aufweisen.

Alle genannten Maßnahmen stellen zwar eine Teillösung für das oben beschriebene Problem dar, erzeugen jedoch in der Fertigung zusätzliche Arbeitsschritte und einen nicht unerheblichen Anteil an Mehrkosten. Darüber hinaus bietet der dargestellte Stand der Technik keinen Lösungsansatz für das Problem der inneren Spannungszustände der Schläuche. Letztlich bleibt der Endzustand im Schlauch undefiniert.

Es ist daher die Aufgabe der Erfindung, ein Fertigungsverfahren für Ladeluftschläuche vorzuschlagen, welches nur unwesentlich hinsichtlich der Fertigungskosten und Prozessschritte vom heutigen Verfahren abweicht, aber trotzdem in der Lage ist, signifikante Steigerungen hinsichtlich der Belastbarkeit und Lebensdauer dieser Schläuche zu realisieren. Eine weitere Aufgabe der Erfindung ist die Reduzierung der Materialkosten, die bei der Schlauchherstellung anfallen.

Die der Erfindung zugrunde liegende Aufgabe wird gelöst durch das Verfahren zur Herstellung eines gekrümmten Formschlauchs, umfassend die Schritte:
a. Bereitstellen eines vernetzbaren Schlauchrohlings, umfassend einen Elastomerschlauch mit einem textilen Druckträger,
b. Überführen des Schlauchrohlings in eine gekrümmte Raumform,
c. Verdrehen des Schlauchrohlings um die Schlauchachse nach einem vorgegebenen Verdrehungsbild in Abhängigkeit von der gekrümmten Raumform, so dass der Druckträger in der gekrümmten Raumform einen spannungsarmen Zustand einnimmt, und
d. Vernetzen des vernetzbaren Schlauchrohlings in der gekrümmten Raumform im verdrehten Zustand.

Die Begriffe "*spannungsfrei*" und "*parallel*", die im Rahmen dieser Beschreibung verwendet werden, umfassen übliche Toleranzen und Abweichungen, und sind demnach im Sinne von "im wesentlichen spannungsfrei" und "im wesentlichen parallel" zu verstehen.

Der Begriff "*gekrümmte Raumform*" umfasst sowohl eine zweidimensional als auch eine dreidimensional gekrümmte Raumform. In der zweidimensional gekrümmten Raumform verläuft die Schlauchachse in einer Ebene.

Der Schlauchrohling hat im wesentlichen den gleichen Aufbau wie die bekannten konventionellen Schlauchrohlinge. Der wesentliche Unterschied besteht darin, dass der Schlauchrohling, vorzugsweise während des Aufziehens auf einen Formdorn, in Abhängigkeit von der gekrümmten Raumform eine Verdrehung erfährt, so dass der Druckträger einen spannungsarmen Zustand einnimmt. Der Begriff "spannungsarmer Zustand" soll einen Zustand bezeichnen, in welchem der textile Druckträger im wesentlichen keine ungleichmäßige Streckung oder Stauchung erfährt. Der spannungsarme Zustand kann in Abhängigkeit von der gekrümmten Raumform rechnergestützt ermittelt werden. Insofern umfasst das erfindungsgemäße Verfahren vorzugsweise einen Schritt des Ermittelns eines spannungsarmen Verdrehungszustands in Abhängigkeit von der gekrümmten Raumform zur Vorgabe des einzustellenden Verdrehungsbildes. Der Grad der Verdrehung sowie der Bereich des Schlauchs, in dem verdreht wird, sind dabei von der Form des Schlauchs und auch dessen Dimensionen abhängig. Für eine bestimmungsgemäße Raumform gibt es eine Vielzahl von spannungsarmen Zuständen, jedoch ist es hilfreich einen besonders spannungsarmen Zustand bzw. einen spannungsoptimierten Zustand zu wählen. Erfindungsgemäß wird der Schlauchrohling in diesem Zustand vernetzt, vorzugsweise vulkanisiert, so dass der spannungsarme Zustand dauerhaft fixiert wird. Dadurch kann die Lebensdauer des Formschlauchs erheblich erhöht werden. Im Ergebnis wird die der Erfindung zugrunde liegende Aufgabe gelöst.

Bevorzugte Weiterbildungen der Erfindung werden in den Unteransprüchen beansprucht.

Es kann sich als vorteilhaft erweisen, einen Schlauchrohling bereitzustellen, bei welchem der textile Druckträger gestrickt ist. Ein derartiger Schlauchrohling erweist sich als besonders geeignet, um eine komplexe Form des Formschlauchs abzubilden.

Es kann von Nutzen sein, wenn ein Schlauchrohling bereitgestellt wird, wobei der Druckträger eine Vielzahl von Maschenstäbchen umfasst, die in einem spannungsfreien Zustand parallel zueinander in einem vorgegebenen Winkel zur Schlauchachse, vorzugsweise parallel zur Schlauchachse, verlaufen. Ein Schlauchrohling mit einem solchen Druckträger erweist sich als besonders stabil und beständig. Außerdem kann ein Schlauchrohling mit einem solchen Druckträger besonders kostengünstig in einem kontinuierlichen Verfahren hergestellt werden, wobei der Druckträger z.B. auf die extrudierte Innenschicht aufgestrickt wird. Die Anzahl der Maschenstäbchen entspricht der Anzahl der Stricknadeln. Vorzugsweise wird der Druckträger mit 12 bis 48, bevorzugt 24 Stricknadeln, gestrickt.

Es kann sich als nützlich erweisen, einen Schlauchrohling bereitzustellen, bei welchem der Elastomerschlauch eine elastomere Innenschicht und eine elastomere Außenschicht aufweist, wobei der textile Druckträger zwischen der Innenschicht und der Außenschicht eingebettet ist. Ein solcher Schlauchrohling kann erheblichen Belastungen standhalten und ist als Ladeluftschlauch vorteilhaft einsetzbar.

Es kann sich als vorteilhaft erweisen, einen Schlauchrohling mit einer Positionierungseinrichtung bereitzustellen, so dass der Schlauchrohling gegenüber einem Formwerkzeug eindeutig positionierbar ist. Die Positionierungseinrichtung ist beispielsweise eine Kerbe, eine Rille, ein Wulst oder eine sonstige Vertiefung oder Erhebung am Innen- und/oder Außenumfang des Schlauchrohlings, um die Lage des Schlauchrohlings und des Druckträgers zu Beginn der Verformung eindeutig identifizieren und definieren zu können.

Es kann sich als vorteilhaft erweisen, einen Schlauchrohling mit einer den Verlauf der Maschenstäbchen anzeigenden Markierung bereitzustellen. Dadurch kann der Verdrehungszustand des Schlauchrohlings schnell und einfach erkannt werden. Die Markierung ist vorzugsweise eine Einfärbung, Vertiefung oder Erhebung am Innen- und/oder Außenumfang des Schlauchrohlings. Vorzugsweise bildet die den Verlauf der Maschenstäbchen anzeigende Markierung gleichzeitig auch die Positionierungseinrichtung.

Es kann von Vorteil sein, wenn der Schlauchrohling derart verdreht wird, dass die Maschenstäbchen in der gekrümmten Raumform zumindest abschnittsweise schleifen- und/oder schraubenförmig um die Schlauchachse verlaufen. Bei einem schleifenförmigen Verlauf verläuft das Maschenstäbchen mit wechselnder Steigungsrichtung zumindest abschnittsweise um die Schlauchachse. Bei einem schraubenförmigen Verlauf verläuft das Maschenstäbchen mit gleichbleibender Steigungsrichtung um die Schlauchachse. Die Steigungsrichtung und der Steigungswinkel richten sich nach der Geometrie des Schlauchs in der dreidimensionalen Raumform und können in verschiedenen Schlauchabschnitten variieren. Dadurch verringern sich die inneren Spannungen des Druckträgers erheblich.

Es kann sich als praktisch erweisen, den Schlauchrohling derart zu verdrehen, dass die Maschenstäbchen im verdrehten Zustand im wesentlichen dieselbe Länge aufweisen. Bei einem in herkömmlicher Weise hergestellten Schlauch verlaufen die Maschenstäbchen des Druckträgers auch im vernetzen Zustand parallel zur Schlauchachse. Dabei ist ein auf einem Biegerücken verlaufendes Maschenstäbchen länger als ein in der Biegekehle verlaufendes Maschenstäbchen. Der Längenunterschied zwischen den Maschenstäbchen ist ein Maß für den Spannungszustand des Druckträgers. Nach dem bevorzugten Verfahren wird der Schlauchrohling derart verdreht, dass die Maschenstäbchen sowohl den Biegerücken als auch die Biegekehle durchlaufen, wobei die Längenunterschiede der Maschenstäbchen im Ergebnis ausgeglichen werden. Dadurch kann der Druckträger einen besonders spannungsarmen Zustand einnehmen.

Ein besonders bevorzugtes Verfahren umfasst die Schritte: Verdrehen des Schlauchrohlings um die Schlauchachse während des Überführens in die gekrümmte Raumform, so dass der Druckträger in der gekrümmten Raumform einen spannungsarmen Zustand einnimmt. Durch gleichzeitiges Ausführen der Schritte b) und c) kann der bestimmungsgemäße Verformungs- und Verdrehungszustand wesentlich genauer und schneller erzielt werden als bei einer der Verformung nachgeschalteten Verdrehung. Dadurch kann die Qualität und Lebensdauer der Formschläuche wesentlich erhöht und die Zykluszeit bei der Fertigung eines Formschlauchs erheblich verkürzt werden.

Ein besonders bevorzugtes Verfahren umfasst die Schritte: Führen des Schlauchrohlings mit einer Führungseinrichtung eines Formwerkzeugs während des Überführens in die gekrümmte Raumform, so dass der Druckträger einen spannungsarmen Zustand einnimmt. Dies kann beispielsweise dadurch erfolgen, dass der Schlauchrohling beim Aufziehen auf einen Formdorn gleichzeitig gedreht wird, bedingt durch eine Oberflächenbeschaffenheit des Formdorns. Das Aufziehen des Schlauchrohlings auf den Formdorn entlang der Schlauchachse kann manuell oder automatisch erfolgen. Durch gleichzeitiges Ausführen der Schritte b) und c) kann der bestimmungsgemäße Verformungs- und Verdrehungszustand wesentlich genauer und schneller erzielt werden als bei einer der Verformung nachgeschalteten Verdrehung, so dass die Qualität und Lebensdauer der Formschläuche weiter erhöht und die Zykluszeit bei der Fertigung eines Formschlauchs weiter verkürzt werden kann.

Ein weiterer bevorzugter Aspekt der Erfindung betrifft eine Vorrichtung zur Herstellung eines gekrümmten Formschlauchs, umfassend ein Formwerkzeug und eine Führungseinrichtung, um einen vernetzbaren Schlauchrohling zumindest abschnittsweise um die Schlauchachse zu verdrehen. Die Verdrehung erfolgt bevorzugt beim Aufziehen auf das Formwerkzeug. Dadurch wird die Handhabung des Schlauchrohlings bei der Herstellung des Schlauches erheblich erleichtert, und der Formschlauch kann nach dem erfindungsgemäßen Verfahren sicher und einfach mit hoher Zuverlässigkeit und Maßhaltigkeit gefertigt werden. Die Aufgaben der Erfindung werden dadurch gelöst.

Es kann von Vorteil sein, wenn die Führungseinrichtung derart ausgebildet ist, um den Schlauchrohling um die Schlauchachse nach einem vorgegebenen Verdrehungsbild in Abhängigkeit von der gekrümmten Raumform zu verdrehen. Im Ergebnis kann der bestimmungsgemäße Verformungs- und Verdrehungszustand noch genauer und schneller erzielt werden, so dass die Qualität und Lebensdauer der Formschläuche noch weiter erhöht und die Zykluszeit bei der Fertigung eines Formschlauchs noch weiter verkürzt werden kann.

Es kann sich als vorteilhaft erweisen, wenn die Führungseinrichtung derart ausgebildet ist, dass der Schlauchrohling während des Überführens in die gekrümmte Raumform um die Schlauchachse verdreht wird, so dass der Druckträger einen spannungsarmen Zustand einnimmt.

Es kann von Vorteil sein, wenn das Formwerkzeug als Formdorn ausgebildet ist, wobei der Formdorn die Führungseinrichtung aufweist. Der Formdorn erlaubt die einfache und vollautomatisierte Fertigung eines Formschlauchs mit hoher Maßhaltigkeit. Aufgrund der in den Formdorn integrierten Führungseinrichtung kann eine gesonderte Führungseinrichtung entfallen.

Es kann auch nützlich sein, wenn die Führungseinrichtung zumindest eine in das Formwerkzeug eingearbeitete Vertiefung und/oder Erhebung umfasst. Diese Führungseinrichtung bewerkstelligt einen Formschluss zwischen dem Formwerkzeug und dem noch weichen und formbaren Material des Schlauchrohlings derart, dass der Schlauchrohling sich nur in einer Richtung entlang des Formwerkzeugs bewegen kann. Die Führungseinrichtung verläuft vorzugsweise schleifen- und/oder schraubenförmig um die Schlauchachse nach einem vorgegebenen Verdrehungsbild in Abhängigkeit von der gekrümmten Raumform, so dass der Druckträger einen spannungsarmen Zustand einnimmt, wenn der Schlauchrohling gegenüber dem Formwerkzeug entlang der Schlauchachse bewegt wird. Die Anzahl der Vertiefungen und/oder Erhebungen der Führungseinrichtung entspricht vorzugsweise der Anzahl der Maschenstäbchen. Dadurch kann der Schlauchrohling mit hoher Maßhaltigkeit in den bestimmungsgemäßen Verformungs- und Verdrehungszustand überführt werden. In einer besonders bevorzugten Ausführung der Erfindung ist das Formwerkzeug ein Formdorn, wobei die Führungseinrichtung eine Vielzahl paralleler, schrauben- und/oder schleifenförmiger Vertiefungen und/oder Erhebungen umfasst, die an einer Mantelfläche des Formdorns nach einem vorgegebenen Verdrehungsbild in Abhängigkeit von der gekrümmten Raumform eingearbeitet sind. Der Schlauchrohling wird zum Überführen in die gekrümmte Raumform entlang seiner Schlauchachse auf den Formdorn aufgezogen. Der Schlauchrohling hat einen engen derart Sitz auf dem Formdorn, so dass der Innenumfang des Schlauchrohlings nur entlang der Vertiefungen und/oder Erhebungen über die Mantelfläche des Formdorns gleiten bzw. rutschen kann. Die Vertiefungen und/oder Erhebungen an der Mantelfläche des Formwerkzeugs bzw. Formdorns wirken mit dem Innenumfang des Schlauchrohlings derart zusammen, dass der Schlauchrohling beim Aufziehen auf den Formdorn entlang seiner Schlauchachse gleichzeitig um die Schlauchachse nach einem vorgegebenen Verdrehungsbild in Abhängigkeit von der gekrümmten Raumform gedreht wird, so dass der Druckträger einen besonders spannungsarmen bzw. spannungsarmen Zustand einnimmt, wenn der Schlauchrohling vollständig aufgezogen ist.

Das erfindungsgemäße Verfahren läuft beispielsweise wie nachfolgend beschrieben ab:
- Breitstellung eines Schlauchrohlings vorbestimmter Länge,
- Benetzen des Schlauchrohlings mit Gleitmittel,
- Aufziehen des Rohlings auf den Formdorn, dabei Verdrehung bestimmter Bereiche in die vorgegebenen Richtungen bis die vorbestimmten Positionen erreicht sind,
- Vernetzen der Rohlinge in der Autoklave.

Analysiert man einen voll vernetzten, herkömmlichen Ladeluftschlauch, so kann man feststellen, dass die Länge der Maschenstäbchen je nach Umfangsposition unterschiedlich ist.

Das bedeutet, dass in einem verformten Schlauch Bereiche zu finden sind, in denen der Druckträger gestaucht ist und es gibt Bereiche, in denen der Druckträger gestreckt ist. Da sich der Druckträger aber zuerst auf einem geraden Schlauch befindet, müssen diese Längenunterschiede ausgeglichen werden. Beides führt zu Spannungen, die sich im schlimmsten Fall durch die Zerstörung des Schlauches bemerkbar machen. In Versuchen konnte gezeigt werden, dass eine lokale Verdrillung bzw. Verdrehung der Maschenstäbchen in bestimmten Bereichen der Mantelfläche sich positiv auf die Spannungszustände ausgewirkt haben. Mittels Simulationshilfsmitteln, insbesondere Computersimulationsprogrammen, kann dargestellt werden, wo die Spannungen entstehen würden und welche die geeigneten Verdrehwinkel dazu sind, um die Spannungen auf ein Minimum zu reduzieren. Ziel ist es einen möglichst energie- bzw. spannungsarmen Zustand zu erreichen.

### Kurze Beschreibung der Zeichnungen

- FIG.1: zeigt einen prinzipiellen Aufbau eines herkömmlichen Formschlauches 1.
- FIG.2: zeigt eine beispielhafte Geometrie des herkömmlichen Formschlauches 1.
- FIG. 3: zeigt einen Ladeluftschlauch 1 mit verdrehten Teilbereichen, der nach dem erfindungsgemäßen Verfahren hergestellt wurde.

### Detaillierte Beschreibung des bevorzugten Ausführungsbeispiels

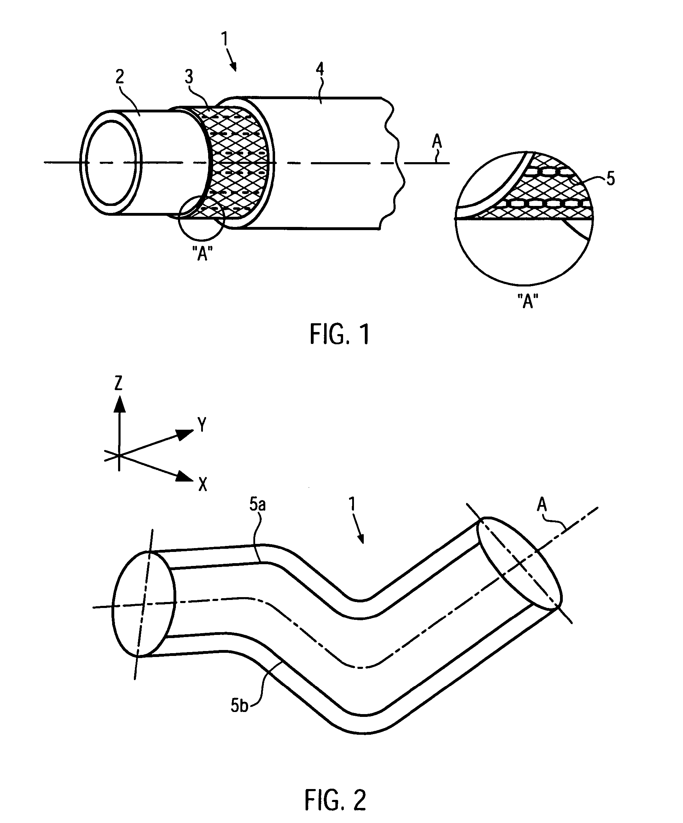

FIG.1 zeigt einen prinzipiellen Aufbau eines herkömmlichen Formschlauches 1, wie er z.B. als Ladeluftschlauch eingesetzt wird. Im Regelfall besteht ein derartiger Schlauch aus einer Innenschicht 2 auf der ein Druckträger 3 aufgebracht ist. Dieser Druckträger 3 ist ein Gestrick, welches eine Vielzahl von Maschenstäbchen 5 aufweist, die sich parallel zur Längsachse A des Schlauchrohlings erstrecken. Ein Maschenstäbchen 5 repräsentiert eine Folge gegenseitig eingebundener Maschen eines Gestrickes, das auf einer Nadel der Strickmaschine gebildet wird. Darüber befindet sich eine zweite, als Deckschicht ausgeführte Schicht 4. Die Schichten 2, 4 sind aus elastomeren Materialien aufgebaut. Zur Formgebung wird der Schlauchrohling auf einen Formdorn aufgezogen.

Eine beispielhafte Geometrie des herkömmlichen Formschlauches 1 ist in Fig. 2 dargestellt. Es ist zu erkennen, dass der Schlauch 1 gekrümmt ist. Betrachtet man beispielhaft zwei Maschenstäbchen 5a, 5b, so kann man erkennen, dass die vormals gleich langen Maschenstäbchen 5a, 5b nun unterschiedliche Längen aufweisen. Dies führt zu den beschriebenen Spannungszuständen, die nicht erwünscht sind.

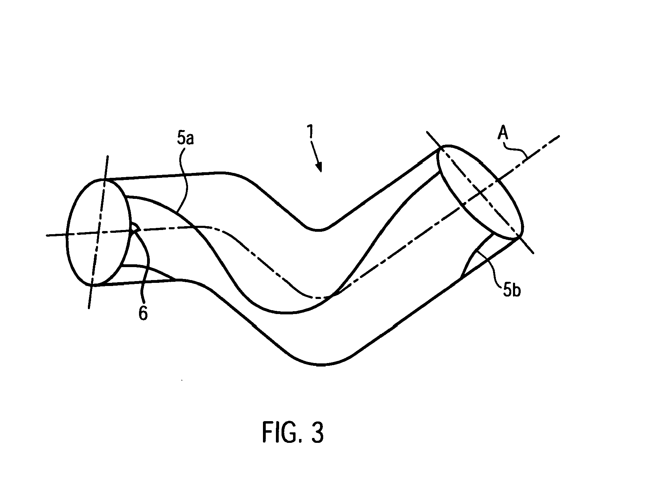

FIG. 3 zeigt einen Ladeluftschlauch 1 mit verdrehten Teilbereichen, der nach dem erfindungsgemäßen Verfahren hergestellt ist. Der Maschenstab 5a ist im mittleren Bereich nach einem vorgegebenen Verdrehungsbild in Abhängigkeit von der gekrümmten Raumform verdreht. Das Verdrehungsbild in Abhängigkeit von der gekrümmten Raumform wurde zuvor rechnergestützt ermittelt. Damit löst sich die Stauchung der Maschenstäbchen 5a, 5b auf und der gestreckte Bereich wird in einen weniger verformten Bereich verlagert, so dass die Zugspannungen verringert werden. Ebenso verhält es sich mit dem Maschenstab 5b und jedem weiteren Maschenstab, welche aus Gründen der Übersichtlichkeit nicht dargestellt wurden.

Am unteren Ende des Ladeluftschlauches 1 befindet sich eine Positioniereinrichtung 6, die eindeutig die Lage des Schlauches und des Gewebes zu Beginn der Verformung definiert.

Das erfindungsgemäße Formwerkzeug ist ein Formdorn, der eine auf die Anzahl der Maschenstäbchen abgestimmte Anzahl von Rillen umfasst, die nach einem vorgegebenen Verdrehungsbild in Abhängigkeit von der gekrümmten Raumform in die Oberfläche des Formdorns eingearbeitet sind. Beim Aufziehen auf den Formdorn folgt der Schlauch den eingearbeiteten Rillen des Formdorns und es entsteht die gewünschte Verdrehung in den einzelnen Bereichen des Rohlings. Mit Hilfe von Zeichnungen, Fotos und/oder Markierungen an der Mantelfläche des Rohlings kann der Werker die korrekte Ausführung überprüfen. Es ist denkbar, dass bei bestimmten Schlauchgeometrien schräge Abschnitte an den Schlauchenden vorgesehen werden, um die Restspannungen auszugleichen, die sich nicht durch die Verdrehung beseitigen lassen.

Im bestimmungsgemäßen Verformungs- und Verdrehungszustand des Rohlings erfolgt dann die Vulkanisation.

### Die Vorteile des erfindungsgemäßen Verfahrens äußern sich wie folgt:

Bei jedem gekrümmten Formschlauch gibt es eine längste "Faser" und eine kürzeste "Faser", die sich beide parallel zur Schlauchachse erstrecken. Der Bedeutung des Begriffs "Faser" ist hier in etwa gleich wie bei der Verwendung in der Bezeichnung "neutrale Faser" in der Biegemechanik. Es handelt sich um eine imaginäre Linie, die auf bzw. in der Schlauchwand parallel zur Schlauchachse verläuft. Die Längendifferenz zwischen der längsten Faser und der kürzeste Faser ist ein Maß für den Verformungszustand des Formschlauchs und wird unter anderem durch Krümmungswinkel und -bogenlängen sowie den Schlauchdurchmesser beeinflusst. Ein Formschlauch weist beispielsweise eine Länge von 300 - 700 mm, einen inneren Durchmesser von ca. 50 - 100 mm und eine Wandstärke von 3 -10 mm auf. Die Längendifferenz zwischen der längsten Faser und der kürzesten Faser beträgt in einem Beispiel 150 mm.

Bei dem herkömmlichen Formschlauch gemäß Fig. 1 verlaufen die Maschenstäbchen des Druckträgers im vernetzen Zustand parallel zur Schlauchachse, so dass die Längendifferenz zwischen dem längsten und dem kürzesten Maschenstäbchen im wesentlichen der Längendifferenz zwischen der längsten Faser und der kürzesten Faser entspricht. Die Längendifferenz zwischen dem längsten und dem kürzesten Maschenstäbchen ist bekanntlich ein Maß für den Spannungszustand des Druckträgers.

Durch das erfindungsgemäße Verfahren kann erreicht werden, dass die Längendifferenz zwischen dem längsten und dem kürzesten Maschenstäbchen weniger als 50%, vorzugsweise weniger als 25%, bevorzugt weniger als 20% der Längendifferenz zwischen der längsten Faser und der kürzeste Faser des Formschlauchs beträgt. Übertragen auf das vorstehend genannte Beispiel kann durch das erfindungsgemäße Verfahren erreicht werden, dass die Längendifferenz zwischen dem längsten und dem kürzesten Maschenstäbchen weniger als 30 mm beträgt, während die Längendifferenz zwischen der längsten Faser und der kürzeste Faser des Formschlauchs 150 mm beträgt. Um die Maschenstäbchen des Druckträgers bei der Verdrehung des Schlauchrohlings möglichst wenig zu beanspruchen, ist es wünschenswert, dass die Summe der Länge aller Maschenstäbchen ein Minimum ergibt.

Durch das erfindungsgemäße Verfahren ist es erstmals möglich, die Lage der Maschenstäbchen im Endprodukt bzw. dem fertig gestellten Formschlauch zu definieren bzw. festzulegen. Es ist ersichtlich, dass der Druckträger des Formschlauchs, der nach dem erfindungsgemäßen Verfahren hergestellt wird, wesentlich geringeren Belastungen ausgesetzt ist als der Druckträger des herkömmlichen Formschlauchs, bei dem die Maschenstäbchen auch im vernetzen Zustand parallel zur Schlauchachse verlaufen.

Die Erfindung wurde mit Bezug auf einen Schlauch beschrieben, der einen gestrickten Druckträger aufweist. Das Prinzip der Erfindung ist aber gleichermaßen anwendbar auf Schläuche mit textilen Druckträgern, die beispielsweise gehäkelt, geflochten, gewoben oder in anderer Weise hergestellt sind.

## Patentansprüche

1. Verfahren zur Herstellung eines gekrümmten Formschlauchs (1), umfassend die Schritte:
a. Bereitstellen eines vernetzbaren Schlauchrohlings, umfassend einen Elastomerschlauch mit einem textilen Druckträger (3),
b. Überführen des Schlauchrohlings in eine gekrümmte Raumform, **gekennzeichnet durch:**
c. Verdrehen des Schlauchrohlings um die Schlauchachse (A) nach einem vorgegebenen Verdrehungsbild in Abhängigkeit von der gekrümmten Raumform, so dass der Druckträger (3) in der gekrümmten Raumform einen spannungsarmen Zustand einnimmt, und
d. Vernetzen des vernetzbaren Schlauchrohlings in der gekrümmten Raumform im verdrehten Zustand.

2. Verfahren nach Anspruch 1, **gekennzeichnet durch**: Bereitstellen eines Schlauchrohlings, bei welchem der textile Druckträger (3) gestrickt ist.

3. Verfahren nach einem der vorangegangenen Ansprüche, **gekennzeichnet durch**: Bereitstellen eines Schlauchrohlings, wobei der Druckträger (3) eine Vielzahl von Maschenstäbchen (5a, 5b) umfasst, die in einem spannungsfreien Zustand parallel zueinander in einem vorgegebenen Winkel zur Schlauchachse (A) verlaufen.

4. Verfahren nach einem der vorangegangenen Ansprüche, **gekennzeichnet durch**: Bereitstellen eines Schlauchrohlings, bei welchem der Elastomerschlauch eine elastomere Innenschicht (2) und eine elastomere Außenschicht (4) aufweist, wobei der textile Druckträger (3) zwischen der Innenschicht (2) und der Außenschicht (4) eingebettet ist.

5. Verfahren nach einem der vorangegangenen Ansprüche, **gekennzeichnet durch**: Bereitstellen eines Schlauchrohlings mit einer Positionierungseinrichtung (6), so dass der Schlauchrohling gegenüber einem Formwerkzeug eindeutig positionierbar ist.

6. Verfahren nach einem der vorangegangenen Ansprüche, **gekennzeichnet durch**: Bereitstellen eines Schlauchrohlings mit einer den Verlauf der Maschenstäbchen (5a, 5b) anzeigenden Markierung.

7. Verfahren nach einem der vorangegangenen Ansprüche, **gekennzeichnet durch**: Verdrehen des Schlauchrohlings derart, dass die Maschenstäbchen (5a, 5b) in der gekrümmten Raumform zumindest abschnittsweise schleifen- und/oder schraubenförmig um die Schlauchachse (A) verlaufen.

8. Verfahren nach einem der vorangegangenen Ansprüche, **gekennzeichnet durch**: Verdrehen des Schlauchrohlings derart, dass die Maschenstäbchen (5a, 5b) im verdrehten Zustand im wesentlichen dieselbe Länge aufweisen.

9. Verfahren nach einem der vorangegangenen Ansprüche, **gekennzeichnet durch**: Verdrehen des Schlauchrohlings um die Schlauchachse (A) während des Überführens in die gekrümmte Raumform, so dass der Druckträger in der gekrümmten Raumform (3) einen spannungsarmen Zustand einnimmt.

10. Verfahren nach einem der vorangegangenen Ansprüche, **gekennzeichnet durch**: Führen des Schlauchrohlings mit einer Führungseinrichtung eines Formwerkzeugs während des Überführens in die gekrümmte Raumform, so dass der Druckträger (3) einen spannungsarmen Zustand einnimmt.

11. Vorrichtung zur Herstellung eines gekrümmten Formschlauchs, umfassend ein Formwerkzeug und eine Führungseinrichtung, um einen vernetzbaren Schlauchrohling zumindest abschnittsweise um die Schlauchachse (A) zu verdrehen.

12. Vorrichtung nach Anspruch 11, **dadurch gekennzeichnet, dass** die Führungseinrichtung derart ausgebildet ist, dass der Schlauchrohling nach einem vorgegebenen Verdrehungsbild in Abhängigkeit von der gekrümmten Raumform um die Schlauchachse verdreht wird, so dass der Druckträger (3) in der gekrümmten Raumform einen spannungsarmen Zustand einnimmt.

13. Vorrichtung nach Anspruch 11 oder 12, **dadurch gekennzeichnet, dass** die Führungseinrichtung derart ausgebildet ist, dass der Schlauchrohling während des Überführens in die gekrümmte Raumform um die Schlauchachse (A) verdreht wird, so dass der Druckträger (3) in der gekrümmten Raumform einen spannungsarmen Zustand einnimmt.

14. Vorrichtung nach einem der Ansprüche 11 bis 13, **dadurch gekennzeichnet, dass** das Formwerkzeug als Formdorn ausgebildet ist, wobei der Formdorn die Führungseinrichtung aufweist.

15. Vorrichtung nach einem der Ansprüche 11 bis 14, **dadurch gekennzeichnet, dass** die Führungseinrichtung zumindest eine in das Formwerkzeug eingearbeitete Vertiefung und/oder Erhebung umfasst.
